Europäisches Patentamt

European Patent Office

Office européen des brevets

(19)

(11) Veröffentlichungsnummer : **0 158 262**
**B1**

(12)

# EUROPÄISCHE PATENTSCHRIFT

(45) Veröffentlichungstag der Patentschrift :
17.08.88

(21) Anmeldenummer : 85103948.7

(22) Anmeldetag : 02.04.85

(51) Int. Cl.⁴ : **B 01 D 53/04**

(54) Druckwechselverfahren zur adsorptiven Trennung von Gasgemischen.

(30) Priorität : 13.04.84 DE 3413895

(43) Veröffentlichungstag der Anmeldung :
16.10.85 Patentblatt 85/42

(45) Bekanntmachung des Hinweises auf die Patenterteilung : 17.08.88 Patentblatt 88/33

(84) Benannte Vertragsstaaten :
DE FR GB IT NL

(56) Entgegenhaltungen :
EP-A- 0 038 410
EP-A- 0 072 083
EP-A- 0 082 948
PATENT ABSTRACTS OF JAPAN, Band 7, Nr. 189 (M-237)[1334], 18. August 1983

(73) Patentinhaber : BAYER AG
Konzernverwaltung RP Patentabteilung
D-5090 Leverkusen 1 Bayerwerk (DE)

(72) Erfinder : Reiss, Gerhard, Dipl.-Ing.
Ottweilerstrasse 20
D-5090 Leverkusen (DE)

## Beschreibung

Die vorliegende Erfindung betrifft ein verbessertes Wechselverfahren mit Vakuumdesorption zur kontinuierlichen Trennung eines Gasgemisches auf adsorptivem Wege mit veringertem Energieverbrauch der Gesamtanlage.

Verfahren mit Druckwechseladsorption (DWA) werden immer dann angewandt, wenn die zu entfernende Komponente des Rohproduktgases in höherer Konzentration, z. B. über 1 Vol.-% vorliegt oder am Adsorbens ungenügend adsorbiert wird und dadurch bei einer thermischen Regeneration große Adsorptionseinheiten und hohe Regenerationsgasmengen notwendig werden. Allgemein erfolgt die adsorptive Trennung bei einem höheren Druck als die nach dem Adsorptionsschritt folgende Desorption der adsorbierten Komponenten. In den meisten Fällen wird die Desorption durch Spülung des Adsorptionsmittels mit einem Teil des Produktgases unterstützt, z. B. bei der Gewinnung von Wasserstoff aus wasserstoffreichen Gasen oder Trocknung von Gasen. Im Falle der adsorptiven Trennung von Luft in Stickstoff und Sauerstoff wird diese Spülung mit dem gewünschten Produktgas, d. h. der nicht adsorbierten Phase oder der adsorbierten Phase vorgenommen.

Für die adsorptive Trennung von Gasen sind mehrere Verfahren bekannt, bei denen die Desorption der adsorbierten Phase mit Hilfe einer Vakuumpumpe erfolgt, z. B. der Gewinnung von $O_2$-angereicherter Luft mit Molekularsieb-Zeolithen (vgl. DE-AS-1 817 004) oder der Gewinnung von Stickstoff aus Luft mit Molekularsiebkoks (K. Knoblauch, Wärme Gas International, Band 32 (1983) Heft 2/3 S.78-80), der Gewinnung von reinem Kohlenoxid aus CO-reichen Gasen mit Molekularsieb-Zeolithen (G. Kurz, Chemie Technik, September 1978) und der Gewinnung von Stickstoff aus Luft mit Molekularsieb-Zeolithen (GB-PS-1 461 569).

Diese Verfahren arbeiten stets bei Umgebungstemperatur, d. h. 20 bis 30 °C, die Adsorption erfolgt bei 1 bar (abs) oder Überdruck. Das zu trennende Gas wird durch eine Schüttung (Adsorber) bestehend aus geeigneten Adsorptions-mitteln wie Aktivkohle, Molekularsieb-Koks, Kieselgel, aktiviertes Aluminiumoxid, Molekularsieb-Zeolithe geleitet, wobei die stärker adsorbierten Komponenten von den weniger stark adsorbierbaren Komponenten getrennt werden und die weniger stark adsorbierbare Phase die Schüttung verläßt. Die Adsorption der einzelnen Komponenten erfolgt meist in mehr oder weniger stark ausgeprägten Zonen, d. h. die am stärksten adsorbierte Komponente reichert sich am Adsorbereintritt und die schwächer adsorbierten Komponenten in Richtung des Adsorberaustritts an. Wenn das zu trennende Gas feucht ist, wird an allen oben erwähnten Adsorptionsmitteln Wasser an der Eintrittszone adsorbiert.

Die Desorption der adsorbierten Phase wird im Falle der Unterdruckdesorption mit Hilfe einer geeigneten Vakuumpumpe durchgeführt, wobei die Strömungsrichtung meist im Gegenstrom zur Adsorptionsrichtung erfolgt und in einigen Fällen am Adsorberende (Adsorptionsaustritt) zur Verbesserung der Desorption ein geeignetes Spülgas, meist ein Teil der nicht adsorbierten Phase, verwendet wird. Der Enddruck der Desorption liegt bei 50 bis 300 mbar und richtet sich u. a. nach der Art der eingesetzten Vakuumpumpe und der zu desorbierenden Komponenten. Nach dem Desorptionsschritt wird der Adsorber wieder auf Adsorptionsdruck aufgefüllt, wobei hierzu die nicht adsorbierte Phase oder zusätzlich das zu trennende Gasgemisch verwendet wird. Die Adsorptionszeit bzw. Desorptionszeit dieser Verfahren liegt bei 30 bis 50 Sekunden.

Eingesetzte Vakuumpumpen sind Wasserring- bzw. Ölringpumpen, basierend auf der Verdrängerwirkung der Rotationsschieber.

Die Wirtschaftlichkeit dieser Anlagen wird neben den Investitionskosten, Ausgaben von Betriebsmitteln wie Nachfüllung von Adsorptionsmitteln, von der Leistungsaufnahme der Vakuumpumpe beeinflußt. In der Praxis hat sich bewährt, hierfür die spezifische Leistung (N), d. h. Energieverbrauch der Vakuumpumpe (N) bezogen auf gewonnene Produktmenge ($V_P$) zu ermitteln $N = N/V_P = KWh/Nm^3$. Der spezifische Energieverbrauch hängt bei vorliegender Vakuumpumpe von verschiedensten Prozessbedingungen, wie desorbierte Gasmenge, Zykluszeit, Desorptionsenddruck, Selektivität des Adsorptionsmittels, erzeugte Produktmenge ab (Chem. Ind. 35/November 1983 S. 689-692).

Generell gilt, daß mit schwächerem Unterdruck (z. B. statt 150 mbar nur 250 mbar) weniger desorbiert werden kann bzw. auch die Erzeugung der nicht adsorbierten Phase geringer wird. Dadurch verschlechtert sich der spezifische Energieverbrauch der Adsorptionsanlage. Durch Vergrößerung der Vakuumpumpe kann dieser Nachteil sicherlich nicht ausgeglichen werden, da hierbei die hineingesteckte Energie auch erhöht wird.

Die nicht ausreichende Desorption erfolgt z. B. bei der $O_2$-Anreicherung von Luft mit Molekularsieb-Zeolithen, wenn die Adsorptionstemperatur von z. B. 25 °C auf unter 10 °C abfällt, dadurch eine erhöhte Stickstoffmenge pro kg Adsorbens adsorbiert wird und der Enddruck der Desorption sich verschlechtert. Damit verringert sich die erzeugte Produktmenge (nicht adsorbierte Phase) und bei gleichbleibender Größe der Vakuumpumpe wird der spezifische Energieverbrauch N der Anlage erhöht.

Gegenstand vorliegender Erfindung ist deshalb ein Verfahren zum Trennen von Gasgemischen, das diese Nachteile des ungünstigen Energieverbrauchs vermeidet, indem Vakuumpumpen angepaßt zum Prozess eingesetzt werden.

Es wurde ein Verfahren der Unterdruckdesorption gefunden, bei dem durch Auswahl und Vorrichtung geeigneter Vakuumpumpen der Energieverbrauch der Vakuumpumpe bezogen auf die gewonnene Produktmenge gegenüber bisher üblichen Verfahren reduziert wird.

Gegenstand der vorliegenden Erfindung ist ein kontinuierlich arbeitendes Adsorptionsverfahren zum Reinigen und Trennen von Gasgemischen durch Druckwechseladsorption, bestehend aus mindestens zwei Adsorptionsmittelbetten, die mit dem zu trennenden Gasgemisch bei mindestens 1 bar (abs) durchströmt werden und wobei die nicht adsorbierte Komponente am Adsorberaustritt abgezogen wird, die Desorption mittels Vakuumpumpe im Gegenstrom zur Adsorption erfolgt und die desorbierte Phase ebenfalls als Produkt abgezogen wird, welches dadurch gekennzeichnet ist, daß das zu trennende Gasgemisch durch Wärmeaustausch mit der Vakuumpumpe aufgewärmt wird, wobei die Vakuumpumpe gegebenenfalls auch aus mindestens zwei in Serie geschalteten, in ihrem Saugvermögen unterschiedlichen, einzelnen Vakuumpumpen besteht.

Das erfindungsgemäße Verfahren soll am Beispiel der Erzeugung von Sauerstoff angereicherter Luft mit Molekularsieb-Zeolithen dargestellt werden.

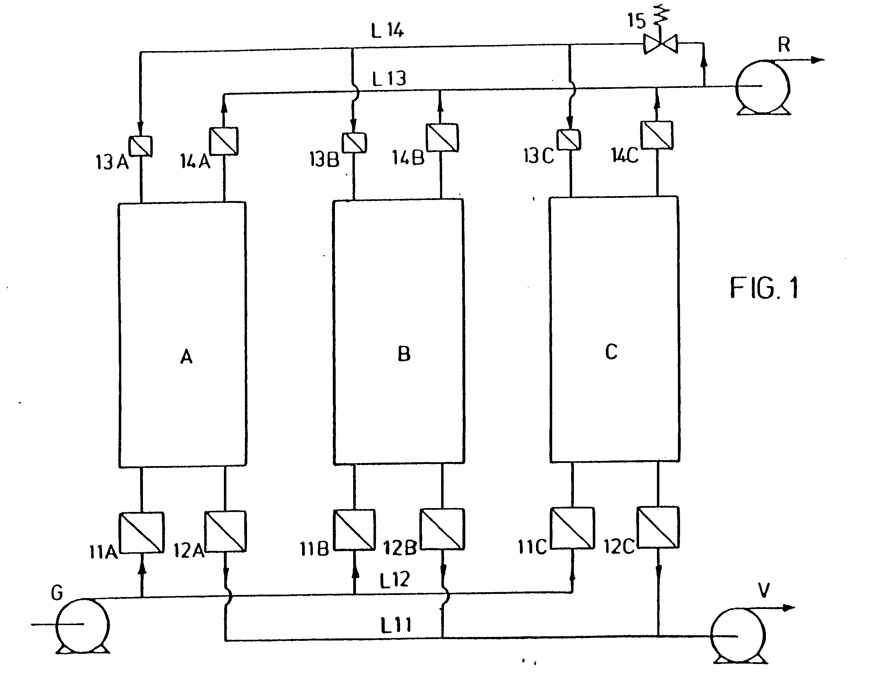

Ein übliches bisher eingesetztes Verfahren (AlChE SympSerNo. 134, vol. 69, 1973 Seite 7) ist in Fig. 1 dargestellt.

An der unteren Seite der Adsorber A, B, C befinden sich Ventile (11) bzw. Klappen für den Rohgaseintritt und Ventile (12) für den Austritt des desorbierten Gases. Das Adsorptionsmittelbett besteht am unteren Ende aus einer Schutzschicht, wie Kieselgel, zur Vortrocknung des eintretenden Rohgases, darüber die Hauptzonen mit Adsorbens zur Trennung des Gasstromes. Am oberen Ende der Adsorber befinden sich Ventile (14) für die Abgabe von adsorptiv behandeltem Gas, über weitere Ventile (13) werden die Adsorber wieder auf Adsorptionsdruck gefüllt. Mit Ventil 15 kann diese Füllung so gesteuert werden, daß ein konstanter Druckanstieg oder eine konstante Füllgasmenge erreicht wird. Das Gebläse (G) der eintretenden Luft überbrückt den Druckverlust bei der Adsorption, der Adsorptionsdruck beträgt ca. 1 bar abs.

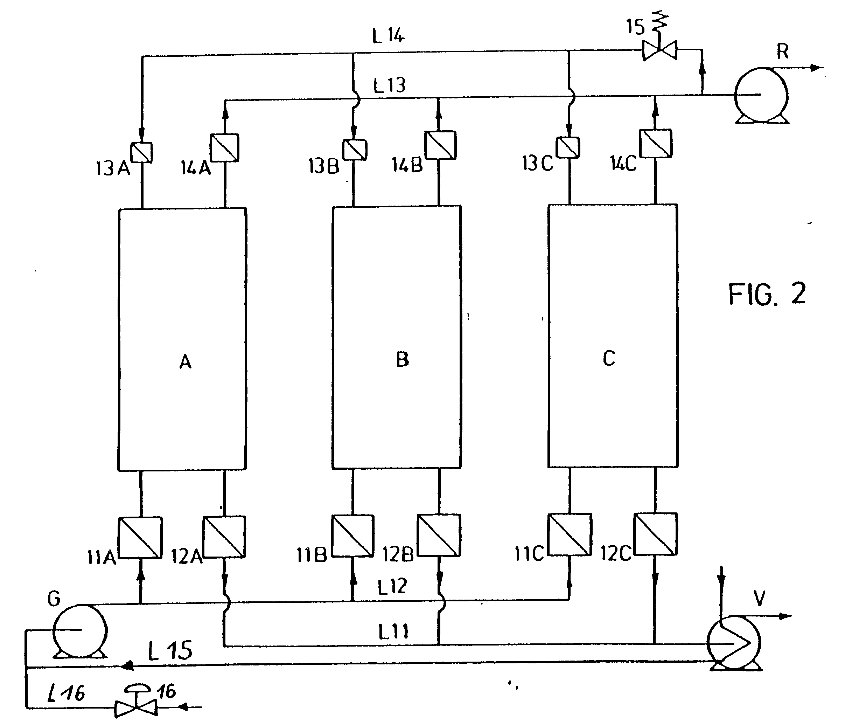

Fig. 2 zeigt das Fließschema eines Teils des erfindungsgemäßen Verfahrens. Im Unterschied zu Fig. 1 wird ein Teil der Umgebungsluft oder die gesamte Luftmenge über die wärmeaustauschende Fläche der Vakuumpumpe (V) geleitet, wobei der aufgewärmte Luftteil mit Umgebungsluft (Ventil 16) gemischt wird und über das Gebläse (G) zur Trennung in das Adsorptionsmittelbett gelangt. Das Mischungsverhältnis von aufgewärmter und nicht aufgewärmter Rohgasmenge richtet sich nach der gewünschten Rohgastemperatur im Adsorber, dem Wärmeaustauschgrad der Vakuumpumpe und der Temperatur des nicht vorbehandelten Rohgases.

Die Aufwärmung des Rohgases über die Vakuumpumpe ist immer möglich, da bekanntlich Vakuumpumpen einen relativ kleinen energetischen Wirkungsgrad aufweisen, d. h. ein großer Teil der z. B. über Strom zugeführten Energie in Wärme übergeführt wird. Hierzu wird z. B. bei Wälzkolbenpumpen die Kühlung der Pumpe mit dem Arbeitsgas (abgepumptes Gas) und — oder zusätzlich — mit Wasser abgekühlt. Die Kühlung mit Gas z. B. Umgebungsluft ist technisch durch Vergrößerung der Wärmeaustauschfläche möglich. Eine Kombination der Kühlung z. B. einer Wälzkolbenpumpe mit Arbeitsgas und separater Umgebungsluft läßt sich ebenfalls durchführen.

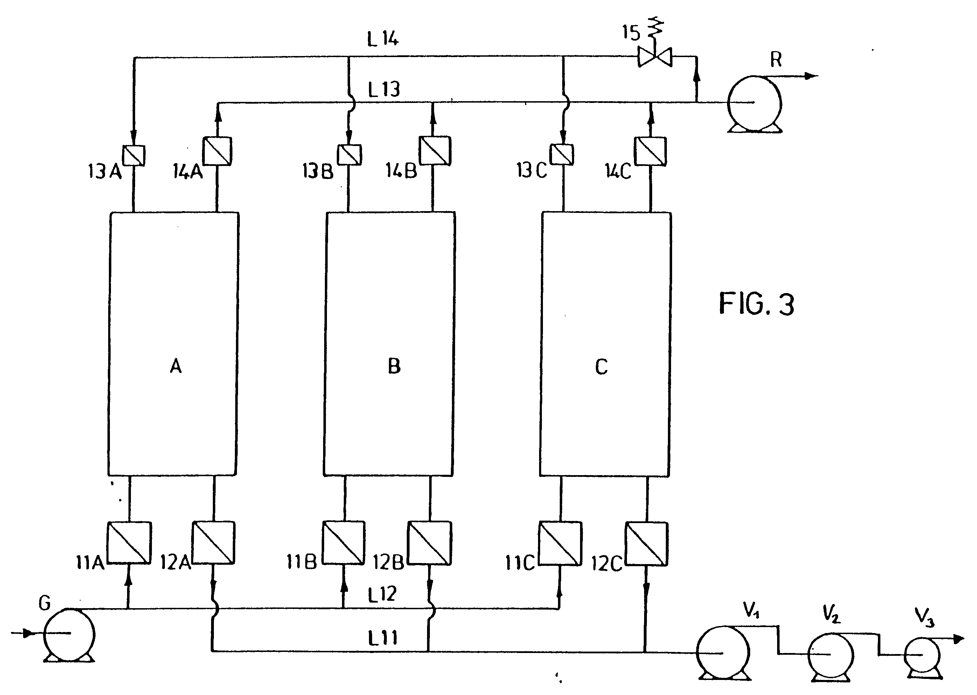

In einer weiteren Ausführungsform des erfindungsgemäßen Verfahrens werden gemäß Fig. 3 mehrere Vakummpumpen in Serie geschaltet, d. h. das desorbierte Gas durchläuft Pumpen, die in Serie geschaltet sind, wobei in Richtung des Atmosphärendrucks das Saugvolumen der Pumpen sich verkleinert. Diese Anordnung erweist sich immer als vorteilhaft, wenn der Vakuumpumpentyp im Bereich des gewünschten Enddrucks gegenüber einem Saugdruck von 1 bar abs eine merklich geringere Saugleistung erbringt, z. B. Wälzkolbenpumpen.

Die größeren der einzelnen Pumpen sind dem Druckwechselprozess anzupassen, um einen möglichst geringen Energieverbrauch zu erreichen. In vielen Fällen ist in etwa die Abstufung der Saugleistung bei zwei in Serie stehenden z. B. Wälzkolbenpumpen 2 : 1, bei drei hintereinander geschalteten Pumpen 3 : 2 : 1. Die genaue Abstufung richtet sich aber nach der Desorptionsgeschwindigkeit der desorbierten Komponenten und der Kenntnis der Vakuumpumpenkennlinie.

Nachfolgende Beispiele zeigen im einzelnen die Verfahrensabläufe und Prozessbedingungen dieser Verfahren, die in Versuchen mit Pilotanlagen und großtechnischen Anlagen gewonnenen Werte demonstrieren die erheblichen Vorteile der erfindungsgemäßen Verfahren.

Beispiel 1,

Fig. 1 zeigt den Stand der Technik mit einer Vakuumpumpe und einer Lufttemperatur von + 25 °C.

Beispiel 2,

Fig. 1 zeigt, daß sich die Leistung der DWA-Anlage gemäß Beispiel 1 verschlechtert, wenn die Lufttemperatur auf z. B. + 7° + 8 °C absinkt.

Beispiel 3,

Fig. 2 zeigt erfindungsgemäß die Wiederherstellung der Anlagenleistung bei zu tiefen Lufttemperaturen.

Beispiel 4,

Fig. 1 entspricht dem Stand der Technik von Beispiel 1, aber es wurde der Leistungsaufwand der Vakuumpumpe ermittelt.

Beispiel 5 + 6,

Fig. 3 zeigt erfindungsgemäß wie durch Einsatz von zwei bzw. drei Vakuumpumpen statt einer Vakuumpumpe des Beispiels 4 der Energiebedarf verringert werden kann.

### Beispiel 1

Es wurde eine DWA-Anlage entsprechend Fig. 1 verwendet, die Gesamtschütthöhe der Adsorber betrug 2.500 mm, je Adsorber waren am Boden 900 kg Kieselgel und darüber 5.500 kg Molekularsieb-Zeolith 5 A in der Körnung 2-5 mm eingefüllt. Es wurde eine Rotationsvakuumpumpe eingesetzt. Mit dem Kompressor (R) konnte sauerstoffangereicherte Luft aus den Adsorbern A, B, C abgezogen und auf 1,1 bis 1,5 bar (abs) verdichtet werden.

Mittels der drei Adsorber konnte ein kontinuierlicher Prozessablauf mit kontinuierlicher Gasabnahme am Kompressor (R) erreicht werden. Es wurde folgender Zeitablauf gewählt :

### Schritt 1 : 0-70 Sekunden

Umgebungsluft von 25 °C strömt über Gebläse (G), Leitung L 12, Ventil 11 A bei einem konstanten Druck von etwa 1 bar (abs) in Adsorber A, sauerstoffangereicherte Luft wird von Gebläse R über Ventil 14 A, Leitung L 13 als Produkt abgezogen. Die Ventile 12 A, 13 A sind geschlossen. Gleichzeitig strömt ein Teil der sauerstoffangereicherten Luft aus Leitung L 13 über das Gasmengensteuerbare Ventil 15, Leitung L 14, Ventil 13 B in Adsorber B, wobei Ventile 14 B, 11 B und 12 B geschlossen sind. Dadurch wird Adsorber B, der vor diesem Schritt der Desorption unterworfen war, d. h. evakuiert wurde, mit sauerstoffangereicherter Luft wieder auf Adsorptionsdruck aufgefüllt. Zur Vermeidung von Unterdruck in Adsorber A, z. B. infolge zu schneller Produktabnahme (Füllgas) aus Leitung L 13, wird Ventil 15 so geregelt, daß ein konstanter Produktfluß (ausgedrückt in Nm³/h) über Leitung L 14, Ventil B in Adsorber B strömt.

Während des Adsorptionsschrittes in Adsorber A und während des Füllschrittes in Adsorber B wird Adsorber C mittels der Vakuumpumpe V über Ventil 12 C, Leitung L 11 evakuiert, d.h. Ventile 11 C, 13 C, 14 C des Adsorbers C sind geschlossen. Nach einer Desorptionsdauer bzw. Abpumpzeit von 70 Sekunden zeigt ein Hg-Manometer, das sich zwischen Ventile 12 C und dem Adsorber C befindet, einen Enddruck von 70 mbar an.

### Schritt 2 : 70-140 Sekunden

Adsorber A wird über Ventil 12 A, Leitung L 11, Vakuumpumpe (V) auf einen Enddruck von 70 mbar abgesaugt, wobei Ventile 11 A, 13 A, 14 A geschlossen sind. Adsorber B ist mit Luft über Gebläse (G), Leitung L 12, Ventil 11 B beaufschlagt, Produktgas wird von Kompressor (R) aus Adsorber B über Ventil 14 B, Leitung L 13 abgezogen. Die Ventile 12 B, 13 B sind geschlossen.

Adsorber C wird von 70 mbar auf einen Adsorptionsdruck von etwa 1 bar (abs) aufgefüllt, wobei sauerstoffangereicherte Luft aus Leitung L 13 über das gasmengengeregelte Ventil 15, Leitung L 14, Ventil 13 C in den Adsorber C gelangt. Hierbei sind Ventile 11 C, 12 C, 14 C des Adsorbers C geschlossen.

### Schritt 3 : 140-210 Sekunden

Adsorber A wird mit sauerstoffangereicherter Luft aus Leitung L 13 über Ventil 15, Leitung L 14, Ventil 13 A von seinem minimalen Desorptionsdruck (70 mbar) auf Adsorptionsdruck 1 bar (abs) gebracht, wozu Ventile 11 A, 12 A und 14 A geschlossen sind.

Adsorber B wird mittels der Vakuumpumpe (V) über Leitung L 11, Ventil 12 B von Adsorptionsdruck auf einen Enddruck von 70 mbar evakuiert. Ventil 11 B, 14 B sind hierbei geschlossen.

Adsorber C liefert sauerstoffangereicherte Luft, d. h. Umgebungsluft gelangt über Gebläse (G), Leitung L 12, Ventil 11 C in Adsorber C, Produktgas wird vom Kompressor (R) über Ventil 14 C, Leitung L 13 abgezogen, wobei Ventile 12 C, 13 C geschlossen sind.

Nach 210 Sekunden Taktdauer wiederholt sich der Prozess, d. h. Adsorber A steht auf Adsorption, Adsorber B wird gefüllt, Adsorber C evakuiert.

Innerhalb von 0,5-1 Stunde nach Beginn des Versuchs konnte über Kompressor (R) ein Produktstrom konstanter Sauerstoffkonzentration gewonnen werden.

Die hierbei gewonnene Produktmenge an sauerstoffangereicherter Luft betrug 240 Nm³/h, der Sauerstoffgehalt 90,5 % Vol., d. h. die $O_2$-Menge von Produkt 217 Nm³ $O_2$/h.

### Beispiel 2

Prozessablauf, Prozessbedingungen waren gleich zu denen im Beispiel 1. Eine Änderung erfolgte durch die Temperatur der angesaugten Luftmenge, sie lag bei +7 bis +8 °C. Es konnte festgestellt werden, daß bei der Abnahme der Temperatur der Prozessluft von +25 °C auf +7/+8 °C der Enddruck langsam anstieg, auf 102 mbar und die Sauerstoffkonzentration der $O_2$-angereicherten Luft von anfänglich 90,5 % Vol. auf 81 % Vol. absank. Die $O_2$-Menge im Produkt betrug somit nur noch 194 Nm³/h. Gegenüber Beispiel 1 hatte sich die Leistungsaufnahme der Vakuumpumpe um etwa 3 % verringert.

### Beispiel 3

Anschließend an die Untersuchung des Beispiels 2 wurde 40 % der +7/+8 °C kalten Umgebungsluft gemäß Fig. 2 über Wärmeaustauscher der Vakuumpumpe aufgewärmt, mit der restlichen Ansaugluft vermischt, die Mischtemperatur betrug 25 °C. Der Enddruck der Desorption sank wieder ab auf 68 mbar. Bei einer Produktabnahme von 240 Nm³/h $O_2$-angereicherter Luft lag die $O_2$-Konzentration im Produkt bei 92 % Vol., d.h. die

$O_2$-Menge im Produkt 221 $Nm^3$ $O_2$/h. Die Leistungsaufnahme der Vakuumpumpe war identisch mit dem Wert des Beispiels 1. Damit konnte für den Fall der ungünstigen Rohgastemperatur von +7/+8 °C ohne zusätzlichen Energieaufwand die optimale Fahrweise des Druckwechselprozesses wieder erreicht werden.

In den Beispielen 4/5/6 wird der Einfluß der Pumpenanordnung bei einem Druckwechselprozess mit Vakuumregenerierung demonstriert, wobei ein Prozess gemäß Beispiel 1 und Fig. 1 gewählt wurde.

### Beispiel 4

Prozessablauf war analog zu Beispiel 1, Fig. 1, der minimalste Desorptionsdruck lag nach 48 Sekunden bei 150 mbar. Das Adsorbervolumen betrug 2 $m^3$.

Die gewonnene Produktmenge lag bei 67 $Nm^3$/h, mit einer $O_2$-Konzentration von 90 % Vol. Als Vakuumpumpe wurde eine Wälzkolbenpumpe mit einer Kapazität von 2 200 $m^3$/h (bei 1 bar) gewählt.

Im Dauerbetrieb betrug die Leistungsaufnahme der Vakuumpumpe 47 kW, d.h. die spezifische Leistung betrug 0,80 $kWh/Nm^3O_2$.

### Beispiel 5

Der Prozessablauf war analog zu Beispiel 1, mit gleichen Daten, nur wurde als Vakuumpumpe ein Pumpenstand aus zwei in Serie geschalteten Wälzkolbenpumpen gemäß Fig. 3 gewählt. Die Pumpe an der Saugseite des Adsorbers hält eine Nennsaugleistung von 1 950 $m^3$/h bei 1 bar abs.

Wie in Beispiel 4 wurde eine Produktmenge von 67 $Nm^3$/h mit 90 % Vol. Sauerstoff gewonnen, die Leistungs- bzw. Stromaufnahme des Pumpenstandes betrug 33 kW, d.h. die spezifische Leistung 0,55 $kWh/Nm^3O_2$.

### Beispiel 6

Der Prozessablauf war analog zu Beispielen 4/5, mit gleichen Daten, nur wurde als Vakuumpumpe ein Pumpenstand bestehend aus drei in Serie geschalteten Wälzkolbenpumpen gewählt. Es wurden Pumpen mit Nennsaugleistungen von 1 850 $m^3$/h und 1 300 $m^3$/h und 600 $m^3$/h in Serie eingesetzt. Die Produktgasmenge betrug 67 $Nm^3$/h mit 90,5 % Vol. Sauerstoff, die Leistungsaufnahme des Pumpenstandes betrug 28,5 kW, d.h. die spezifische Leistung der Druckwechselanlage lag bei 0,47 $kWh/Nm^3O_2$.

Bei höheren Gasmengen, d.h. größeren Anlagen verbessert sich der Wirkungsgrad von Vakuumpumpen. Deshalb konnte in einer Großanlage zur Erzeugung 550 $Nm^3O_2$ angereicherter Luft/h mit einem $O_2$-Gehalt von 92,5 % Vol. aus Umgebungsluft (24 °C) mit Hilfe eines Pumpenstandes bestehend aus drei hintereinander geschalteten Wälzkolbenpumpen eine spezifische Leistung der Gesamtanlage von 0,43 $kWh/Nm^3O_2$ erreicht werden. Zur Erzielung dieses niedrigen Energieverbrauchs ist eine genaue Abstimmung der Pumpen notwendig. Durch Verbesserung des Wirkungsgrades der Einzelpumpen läßt sich eventuell die spezifische Leistung dieser Anlagen noch etwas senken, eventuell auf unter 0,4 $kWh/Nm^3O_2$.

**Patentansprüche**

1. Kontinuierlich arbeitendes Adsorptionsverfahren zum Reinigen und Trennen von Gasgemischen durch Druckwechseladsorption, bestehend aus mindestens zwei Adsorptionsmittelbetten, die mit dem zu trennenden Gasgemisch bei mindestens 1 bar (abs) durchströmt werden und wobei die nicht adsorbierte Komponente am Adsorberaustritt abgezogen wird, die Desorption mittels Vakuumpumpe im Gegenstrom zur Adsorption erfolgt und die desorbierte Phase ebenfalls als Produkt abgezogen wird, dadurch gekennzeichnet, daß das zu trennende Gasgemisch durch Wärmeaustausch mit der Vakuumpumpe aufgewärmt wird, wobei die Vakuumpumpe gegebenenfalls auch aus mindestens zwei in Serie geschalteten, in ihrem Saugvermögen unterschiedlichen, einzelnen Vakuumpumpen besteht.

2. Verfahren nach Anspruch 1, dadurch gekennzeichnet, daß als Vakuumpumpen Wälzkolbenpumpen verwendet werden.

3. Verfahren nach Anspruch 1 oder 2, dadurch gekennzeichnet, daß als Gasgemisch Luft eingesetzt wird.

### Claims

1. Continuously operating adsorption process for the purification and separation of gas mixtures by pressure change adsorption, consisting of at least two beds of adsorbent through which the gas mixture to be separated flows at a pressure of at least 1 bar (abs), the components which are not adsorbed being removed at the exit from the adsorber, desorption being carried out in countercurrent to adsorption by means of a vacuum pump and the desorbed phase also being removed as product, characterised in that the gas mixture to be separated is heated by heat exchange with the vacuum pump, the vacuum pump optionally consisting at least two individual vacuum pumps connected in series, each having a different suction capacity.

2. Process according to claim 1, characterised in that the vacuum pumps used are Roots vacuum pumps.

3. Process according to claim 1 or 2, characterised in that the gas mixture is air.

### Revendications

1. Procédé d'adsorption opérant en continu pour la purification et la séparation de mélanges gazeux par adsorption à pression variable, dans lequel on utilise au moins deux lits d'agents adsorbants qui sont traversés par le mélange gazeux à séparer à une pression absolue d'au moins 1 bar et le composant non adsorbé est évacué à la sortie de l'adsorbeur, la désorption est effectuée à l'aide d'une pompe à vide à contre-courant de l'adsorption et la phase désorbée est également évacuée à l'état de produit, caractérisé en ce que l'on réchauffe le mélange gazeux à séparer par échange de chaleur avec la pompe à vide, laquelle le cas échéant peut consister en au moins deux pompes à vide individuelles disposées en série et ayant des capacités d'aspiration différentes.

2. Procédé selon la revendication 1, caractérisé en ce que l'on utilise en tant que pompes à vide des pompes à pistons rotatifs.

3. Procédé selon la revendication 1 ou 2, caractérisé en ce que le mélange gazeux mis en œuvre consiste en air.

FIG. 1

FIG. 2

L 14

L 13

15

R

13 A    14 A    13 B    14 B    13 C    14 C

A    B    C

11A    12A    11B    12B    11C    12C

G    L 12    L 11    V

L 15

L 16    16

0 158 262

FIG. 3

L 14

L 13

15

R

13A 14A 13B 14B 13C 14C

A B C

11A 12A 11B 12B 11C 12C

G L 12

L 11

V₁ V₂ V₃

0 158 262